Europäisches Patentamt

European Patent Office

Office européen des brevets

(11) Veröffentlichungsnummer: **0 222 854**
**B1**

(12) **EUROPÄISCHE PATENTSCHRIFT**

(45) Veröffentlichungstag der Patentschrift: **18.07.90**

(51) Int. Cl.⁵: **H 04 B 1/20**

(21) Anmeldenummer: **86903318.3**

(22) Anmeldetag: **10.05.86**

(86) Internationale Anmeldenummer:
**PCT/EP86/00275**

(87) Internationale Veröffentlichungsnummer:
**WO 86/06897 20.11.86 Gazette 86/25**

(54) FERNSTEUEREINHEIT FÜR GERÄTE DER UNTERHALTUNGSELEKTRONIK.

(30) Priorität: **13.05.85 DE 8514075 u**

(43) Veröffentlichungstag der Anmeldung:
**27.05.87 Patentblatt 87/22**

(45) Bekanntmachung des Hinweises auf die
Patenterteilung:
**18.07.90 Patentblatt 90/29**

(84) Benannte Vertragsstaaten:
**AT BE CH DE FR GB IT LI LU NL SE**

(56) Entgegenhaltungen:
**DE-A-3 003 425**
**GB-A-2 146 813**
**US-A-4 119 839**

**Patents Abstracts of Japan, Band 8, Nr. 223,**
**(P307)(1660) 12. Oktober 1984 & JP-A-59105164**
**Patents Abstracts of Japan, Band 5, Nr. 74,**
**(E57)(746) 16. Mai 1981 & JP-A-5624822**

(73) Patentinhaber: **Deutsche Thomson-Brandt
GmbH
Hermann-Schwer-Strasse 3 Postfach 1307
D-7730 Villingen-Schwenningen (DE)**

(72) Erfinder: **LASKUS, Rolf
Eintrachtstrasse 12
D-7730 Villingen-Schwenningen (DE)**

Courier Press, Leamington Spa, England.

**Beschreibung**

Die Neuerung befaßt sich mit einer Fernsteuereinheit für Geräte der Unterhaltungselektronik.

Es ist bekannt, die Bedienungsfunktionen von Geräten der Unterhaltungselektronik mittels drahtloser Fernbedienungen fernzusteuern.

So gibt es beispielsweise Fernsteuereinheiten für Fernsehempfänger, für Videorecorder und HiFi-Anlagen. Im direkten voneinander anhängigen Zusammenhang stehen hier funktionsgemäß Fernsehempfänger und Videorecorder, da bei Wiedergabe die gespeicherten Informationen des Videorecorders nur über eine Fernsehempfänger sichtbar bzw. hörbar sind. Sind beide Geräte fernbedienbar, ist beiden je eine separate Fernsteuereinheit zugeordnet, d.h. für die optimale Wiedergabe einer auf einem Magnetband aufgezeichneten Sendung müssen zwei Fernsteuereinheiten zu Hilfe genommen werden. Der Videorecorder bekommt über seine Fernsteuereinheit den Einschalt- sowie den Start- und Kanalwahlbefehl und dem Fernsehempfänger werden über seine zugeordnete Fernsteuereinheit die analogen Stellgrößen wie z.B. Ein- /Ausschalten, Lautstärke, Bildhelligkeit, Farbkontrast übermittelt. Will man veschiedene Ausschnitte auf einem Magnetband suchen ist es erforderlich, ständig mit zwei Fernsteuereinhenten zu hantieren, um jeweils eine optimale Einstellung bzw. Wiedergabe zu erreichen.

Aus der DE—A—3 003 425 ist schon bekannt, verschiedene Geräte mittels einer einzigen Fernbedienung an zusteuern.

Außerdem haben heute, insbesondere bei Mikroprozessorgeräten, Fernsteuereinheiten einen weit über die reinen Funktionen von Fernseh- und Video- Fernbedienungen hinausgehenden Umfang an Bedienungsfunktionen erhalten.

Um eine hierdurch bedingte Bedienungsvielfalt und Unsicherheit einzuschränken, wird die Aufgabe gestellt, eine einzige, für mehrere Gerätetypen maßgeschneiderte Fernsteuereinheit zu schaffen.

Diese Aufgabe wird durch die in den Ansprüchen angegebene Neuerung gelöst.

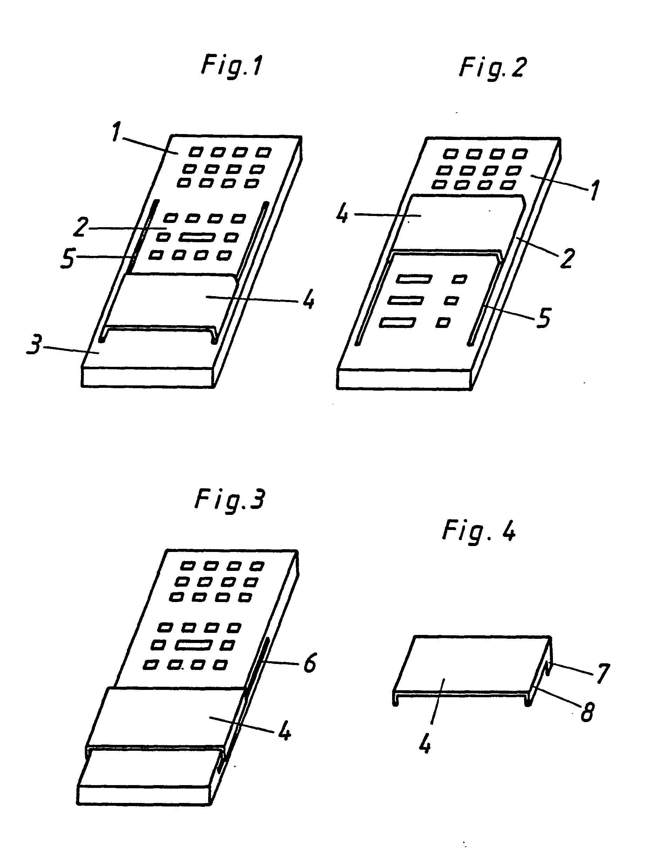

Die durch diese Erfindung erzielten Vorteile ergeben sich durch die Möglichkeit, unterschiedlich wertige Elemente nach Wunsch mischen zu können und beide Geräte-Einheiten mit nur einer Fernsteuereinheit bedienen zu können. An sich ist schon aus den Patent Abstracts of Japan, Band 5, Nr. 74 (E57) (746) 16. Mai 1981 (JP—A—5 624 022) bekannt, Teile eines Empfängers zu verdecken, um Fehlbedienungen zu vermeiden. Anhand der Figuren 1 bis 4 wird die Erfindung erlautert.

Fig. 1 zeigt die neuerungsgemäße Fernsteuereinheit programmiert für die Ferbedienung eines Fernsehempfängers;

Fig. 2 zeigt die neuerungsgemäße Fernsteuereinheit programmiert für die Fernbedienung eines Videorecorders;

Fig. 3 zeigt eine Ausführungsvariante der neuerungsgemäßen Fernsteuereinheit;

Fig. 4 zeigt den für die Programmierung vorgesehenen Schieber.

Die neuerungsgemäße Fernsteuereinheit ist unterteilt in drei Bedienungssegmente 1—3. Beispielsweise sind im oberen Segment 1 die gemeinsamen Bedienungselemente untergebracht, mit denen sowohl der Fernsehempfänger als auch der Videorecorder fernbedient werden sollen, z.B. für die Kanäle und die Tuner-Funktionen. Im mittleren Segment 2 befinden sich die Bedienungselemente, die nur auf den Videorecorder-Betrieb abgestellt sind, wie Start, Stop, Vorlauf, Rücklauf, Aufnahme, Wiedergabe und das untere Segment 3 ist speziell auf die Fernsehempfänger-Funktionen ausgerichtet, wie z.B. Farbkontrast und Bildhelligkeit.

Der Schieber 4 hat an seinen Seitenkanten kufenartige Ausbildungen 8 mit denen er in in der Fernsteuereinheit vorhandenen Nuten 5 gleitbar angeordnet ist.

So ist der Schieber schiebbar derart, daß er die beiden unteren Segmente 2, 3 überstreicht und beim überdecken eines dieser beiden unteren Segmente jeweils das andere Segment freiliegt. Wird der Schieber 4 über das mittlere Segmente 2 geschoben, so liegen die Segmente 1 und 3 frei, d.h. der Fernsehempfänger kann fernbedient werden. Wird der Schieber 4 über das Segment 3 geschoben, liegen die Segmente 1 und 2 frei, was bedeutet, daß jetzt die Bedienungselemente für den Videorecorder freiliegen. Da jeweils das nicht benötigte Segment von dem Schieber abgedeckt ist, sind Fehlbdienungen ausgeschlossen. Auch in einem nur maßig beleuchteten Raum ist eine exakte Bedienung der Fernsteuereinheit gewährleistet.

Eine vorteilhafte Weiterbildung der neuerungsgemäßen Fernsteuereinheit liegt darin, die speziell auf die einzelnen Geräte abgestimmten Bedienungssegmente ein- oder abschaltbar auszuführen, und mit dieser Umschaltung gleichzeitig den Code des Fernsteuereinsignals zu ändern damit nur die bedienenden Funktionen oder Geäte angesprochen werden.

Um somit die Fernsteuereinheit jeweils auf Fernseh- oder Videorecorderbetrieb zu schalten, wird neuerungsgemäß beim Verschieben des Schiebers 4 durch eine an einer der beiden kufenartigen Ausbildungen 8 angeordnete durch die eine Nut 5 der Fernsteuereinheit in die Fernsteuereinheit ragende Nase 7 in der Fernsteuereinheit ein hier nicht dargestellter Schalter betätigt. Befindet sich der Schieber 4 über dem unteren Segment 3, sind die Bedienungselemente für den Videorecorder eingeschaltet. Befindet sich dagegen der Schieber 4 über dem Segment 2, sind die Bedienungselemente für den Fernsehempfänger eingeschaltet. Die gemeinsamen Bedienungselemente des oberen Bedienungssegments 1 sind immer eingeschaltet.

Es ist selbstverständlich, daß die Bedienungssegmente auch in anderer Reihenfolge aufgeteilt sein können. Auch kann der Schieber 4 seitlich, die Fernsteuereinheit umfassend, in Nuten 6 der Fernsteuereinheit gleitend angeordnet sein (Fig. 3). Es ist genauso denkbar, daß andere Geräte der Unterhaltungselektronik in unterschiedlicher Zusammenstellung auf gleiche Weise kombinierbar sind.

**Patentansprüche**

1. Fernsteuereinheit für Geräte Unterhaltungselektronik, wobei die Mittel für die Fernbedienung mehrerer Geräte der Unterhaltungselektronik in einer einzigen Fernsteuereinheit zusammengefaßt sind, dadurch gekennzeichnet, daß die Fernsteuereinheit in Bedienungssegmente für Geräte mit gemeinsamen Bedienungselementen und in Bedienungssegmente für Geräte mit nur auf diese Geräte funktionsmäßig ausgerichtete Bedienungselemente aufgeteilt ist, und daß mittels enes Schiebers (4) einzelne Bedienungssegmente abdeckbar und die damit angesprochenen Funktionen ein-/abschaltbar sind.

2. Fernsteuereinheit nach Anspruch 1, dadurch gekennzeichnet, daß die Mittel für die Fernbedienung eines Fernsehempfängers und eines Videorecorders in der einzigen Fernsteuereinheit zusammengefaßt sind.

3. Fernsteuereinheit nach Anspruch 2, dadurch gekennzeichnet, daß in einem (1) der Bedienungssegmente die Bedienungselemente für gemeinsame Bedienungsfunktionen des Videorecorders und des Fernsehempfängers, in einem zweiten Bedienungssegment (2) die Bedienungselemente für den Videorecorder und in einem dritten Bedienungssegment (3) die Bedienungselemente für den Fernsehempfänger angeordnet sind.

4. Fernsteuereinheit nach Anspruch 3, dadurch gekennzeichnet, daß der Schieber (4) an seinen Seitenkanten kufenartige Ausbildungen (8) hat, mit denen er in in der Fernsteuereinheit befindlichen Nuten 5 verschiebbar ist.

5. Fernsteuereinheit nach Anspruch 4, dadurch gekennzeichnet, daß die Ein/Abschaltung mittels eines mit dem Schieber (4) betätigbaren, in der Fernsteuereinheit angeordneten Schalter stattfindet.

6. Fernsteuereinheit nach Anspruch 4, dadurch gekennzeichnet, daß die Ein/Abschaltung mittels eines mit dem Schieber (4) betätigbaren außen am Gehäuse der Fernsteuereinheit angeordneten Schalters stattfindet.

7. Fernsteuereinheit nach den Ansprüchen 5 oder 6, dadurch gekennzeichnet, daß eine an der kufenartigen Ausbildung (8) des Schiebers (4) angeordnete Nase (7) den Schalter betätigt.

**Revendications**

1. Dispositif de télécommande pour appareils de l'électronique des loisirs groupant les moyens pour la commande à distance de plusieurs appareils de l'électronique des loisirs dans un seul dispositif de télécommande, caractérisé en ce que le dispositif de télécommande est divisé en zones de commande pour appareils ayant des éléments de commande communs et en zones de commande pour appareils ayant des éléments de commande uniquement adaptés aux fonctions de ces appareils, et en ce que des zones de commande individuelles peuvent être recouvertes par un volet (4) et que les fonctions ainsi activées peuvent être mises en/hors circuit.

2. Dispositif de télécommande selon la revendication 1, caractérisé en ce que les moyens pour la commande à distance d'un récepteur de télévision et d'un magnétoscope sont groupés dans le dispositif de télécommande unique.

3. Dispositif de télécommande selon la revendication 2, caractérisé en ce que dans l'une (1) des zones de commande sont disposés les éléments de commande pour des fonctions de commande communes du magnétoscope et du récepteur de télévision, dans une deuxième zone de commande (2) les éléments de commande pour le magnétoscope et dans une troisième zone de commande (3) les éléments de commande pour le récepteur de télévision.

4. Dispositif de télécommande selon la revendication 3, caractérisé en ce que le volet (4) possède à ses bords latéraux des prolongements en forme de patins (8) grâce auxquels il est déplaçable dans des rainures 5 prévues dans le dispositif de télécommande.

5. Dispositif de télécommande selon la revendication 4, caractérisé en ce que la mise en/hors circuit est réalisée à l'aide d'un interrupteur disposé dans le dispositif de télécommande, actionnable par le volet (4).

6. Dispositif de télécommande selon la revendication 4, caractérisé en ce que la mise en/hors circuit est réalisée par un interrupteur, disposé à l'extérieur du dispositif de télécommande, actionnable par le volet (4).

7. Dispositif de télécommande selon les revendications 5 ou 6, caractérisé en ce que l'interrupteur est actionné par un nez (7), disposé sur l'un des prolongements en forme de patin (8) du volet (4).

**Claims**

1. Telecontrol unit for electronic leisure apparatuses, in which the means for the remote control of a plurality of electronic leisure apparatuses are combined in a single telecontrol unit, characterised in that the telecontrol unit is sub-divided into control segments for apparatuses with common control elements and control segments for apparatuses with control elements geared functionally only to these apparatuses, and that individual control segments can be covered by means of slide (4) and the functions thereby actuated be switched on/off.

2. Telecontrol control unit according to claim 1, characterised in that the means for the remote control of a television receiver and a video recorder are combined in the single telecontrol unit.

3. Telecontrol unit according to claim 2, characterised in that in one (1) of the control segments there are located the control elements for common control functions of the video recorder and the television receiver, in a second control segment (2) the control elements for the video recorder, and in a third control segment (3) the control elements for the television receiver.

4. Telecontrol unit according to claim 3, characterised in that the slide (4) has at its lateral edges runner-type formations (8) with which it can be inserted into grooves (5) provided in the telecontrol unit.

5. Telecontrol unit according to claim 4, characterised in that the switching on/off takes place by means of a switch located in the telecontrol unit and actuatable with the slide (4).

6. Telecontrol unit according to claim 4, characterised in that the switching on/off takes place by means of a switch located outside on the casing of the telecontrol unit and actuatable with the slide (4).

7. Telecontrol unit according to claim 5 or 6, characterised in that a lug (7) located on the runner-type formation (8) of the slide (4) actuates the switch.

4

Fig.1

Fig.2

Fig.3

Fig. 4